(19) Europäisches Patentamt
European Patent Office
Office européen des brevets

(11) Publication number: 0 115 183 B1

(12) **EUROPEAN PATENT SPECIFICATION**

(45) Date of publication of patent specification: **01.03.89**

(51) Int. Cl.$^4$: **G 01 N 27/12** // G01N33/00

(21) Application number: **83307857.9**

(22) Date of filing: **22.12.83**

(54) **Hydrogen-selective sensor.**

(30) Priority: **28.12.82 JP 227568/82**

(43) Date of publication of application:
**08.08.84 Bulletin 84/32**

(45) Publication of the grant of the patent:
**01.03.89 Bulletin 89/09**

(84) Designated Contracting States:
**DE FR GB**

(56) References cited:
**US-A-4 324 761**

**PATENT ABSTRACTS OF JAPAN, vol. 6, no. 212, 26th October 1982, page (P-151) (1090); & JP-A-57-118150**

**PATENT ABSTRACTS OF JAPAN, vol. 5, no. 38, 12th March 1981, page (P-52) (710); & JP-A-55-162046**

(73) Proprietor: **NEW COSMOS ELECTRIC CO., LTD.**
**2-5-4, Mitsuya-naka Yodogawa-ku**
**Osaka-shi Osaka-fu (JP)**

(72) Inventor: **Fukui, Kiyoshi**
**8-go, 1-ban, 2-chome Horidome-higashi**
**Wakayama-shi Wakayama-ken (JP)**

(74) Representative: **Allam, Peter Clerk et al**
**LLOYD WISE, TREGEAR & CO. Norman House**
**105-109 Strand**
**London WC2R 0AE (GB)**

**EP 0 115 183 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

This invention relates to a hydrogen gas sensor having a particularly high degree of sensitivity with respect to hydrogen gas.

For controlling burning conditions in burning equipment such as boilers, gas heaters and kerosene heaters, it is well known to use a highly selective sensor which readily detects one of the gaseous components of the exhaust gas or incombustible gas discharged from the equipment, for example, oxygen, carbon monoxide, hydrogen, nitrogen oxides, sulphur oxides, carbon dioxide, water vapor, and hydrocarbon. Thus, for example, hydrocarbons may be detected by employing an FID (or hydrogen flame ionization detector) which has a high degree of detection sensitivity. Again, in the method of detecting carbon monoxide or carbon dioxide, catalyzer nickel is used to reduce it to methane for high sensitivity detection.

In recent years hydrogen gas has been attracting attention as a clean energy source and vigorous research has been conducted to develop effective methods of its generation, storage and utilization. There is a possibility of hydrogen gas being utilized for practical purposes as an important energy source in future, but hydrogen gas is prone to explosion and so great care must be taken in its treatment.

Therefore hydrogen gas must be detected with high sensitivity, but the above methanization method utilizing FID has the disadvantage of being unable to detect hydrogen gas.

In US—A—4324761 is disclosed a hydrogen gas sensor which comprises a gas sensing element including (i) a layer of polycrystalline titanium dioxide, which is a semiconductor, and whose electrical conductivity is sensitive to the presence of hydrogen, (ii) a catalytic top film of platinum or palladium which dissociates hydrogen gas to hydrogen atoms, and (iii) interposed between the catalytic film and layer of titanium dioxide a thin metallic film which serves to slow the rate of diffusion of hydrogen ions to the titanium dioxide layer.

JP—A—57—118150 discloses a hydrogen gas sensor in which the hydrogen gas detecting layer is comprised of a mixture of silicon dioxide, magnesium oxide, cobalt or a cobalt compound, and stannic oxide.

The present invention seeks to provide a hydrogen selective gas sensor of high sensitivity to hydrogen gas but low sensitivity to other gases, and which is obtainable at low cost.

The hydrogen gas sensor in accordance with this invention comprises a gas sensing element including a semiconductor member whose electrical conductivity is sensitive to the presence of hydrogen and which is comprised of a sintered metal oxide selected from $SnO_2$, $ZnO$, $Co_3O_4$, $WO_3$, $In_2O_3$+Pt, $\alpha$-$Fe_2O_3$ and $BaTiO_3$+$Np_2O_3$; and a thin layer of a cermic material inactive for oxidation of hydrogen serving as a diffusion barrier to gases other than hydrogen gas for said semiconductor member, the ceramic material being selected from silicon oxide, aluminum oxide and silicon nitride, and said thin layer of ceramic material having a porosity such as to permit ready passage of hydrogen molecules but inhibit passage of other gases.

The thin layer of ceramic material may be formed on an entire surface of the gas-sensing element or at least on a surface of the semiconductor member.

Preferably, the thin layer of ceramic material is formed by causing a vapor, thermally decomposable to produce silicon oxide, aluminum oxide or silicon nitride to decompose on the semiconductor member heated to a temperature to effect said thermal decomposition of said vapor, thereby to deposit silicon oxide, aluminum oxide or silicon nitride on the semiconductor member. This chemical vapor deposition process is carried out under strict control so that the resulting thin coat has a thickness and a fine structure permeable by hydrogen molecules.

According to this invention as described above, an excellent sensor having a sharp hydrogen-sensitivity can be obtained by a relatively simple method and at low cost. In particular, the semiconductor member of the gas sensing element retains its excellent porosity at its center although its surface porosity is diminished by the thin ceramic layer. Therefore, a great advantage is obtained in that the hydrogen, having passed through the thin ceramic layer is detected by the gas-sensing element with a high degree of sensitivity. A further advantage is that this sensor is highly durable because the ceramic material forming the thin layer is chemically and thermally stable. The thin ceramic layer does not peel off the semiconductor member as there is good compatibility between the ceramic material and the sintered material of the semiconductor. Thus, the sensor according to this invention provides highly reliable measurement data at all times.

The invention will now be described in more detail with reference to the accompanying drawings, in which:

Figure 1 is a partly broken away, somewhat schematic front view of a prior art gas sensor;

Figure 2 is a partly broken away, somewhat schematic front view of a hydrogen sensor according to one preferred embodiment of this invention;

Figure 3 is a partly broken away perspective view of the embodiment shown in Figure 2;

Figure 4 is an enlarged illustrative view of a principal portion of Figure 2;

Figure 5 is a graph illustrating the relationship between the treating time in the formation of the thin ceramic layer and the sensitivity of the resulting sensor in respect of various types of gas;

Figure 6A is a graph illustrating the sensitivity of a hydrogen sensor of this invention with respect to various types of gas;

Figure 6B is a graph illustrating the sensitivity

of an equivalent gas-sensing element which lacks the thin ceramic layer;

Figure 7 is a graph illustrating the dependency of the sensor sensitivity on bridge voltage; and

Figure 8 is a view illustrating the measurement circuitry of a gas sensor of this invention.

Prior to describing the illustrated embodiment of this invention, a description is given with reference to Figure 1 of a known example of gas-sensing element.

The gas-sensing element 1 shown in Figure 1 comprises a heater 2, a base plate 3 formed of alumina ($Al_2O_3$), (both heater 2 and base plate 3 being optional), a pair of flat vapor deposition layers 4 of platinum (Pt) printed on the base plate 3, and a piece of sintered metal oxide 5 such as tin oxide ($SnO_2$) coated on the base plate 3 and the vapor deposition layers 4. The vapor deposition layers 4 constitute electrodes of the element 1, and the tin oxide forming the sintered piece 5 is a semiconductor.

A hydrogen sensor 7 according to this invention, and a method for the manufacture thereof, will now be described with reference to Figure 2. The sensor 7 in this embodiment makes use of the construction shown in Figure 1.

First, a silicon compound, trimethyl chlorosilane ($(CH_3)_3SiCl$), and the gas-sensing element 1 of Figure 1 are made available for use.

Next, 1 ml of trimethyl chlorosilane is placed in a vessel which is put into a chamber having a 1 l (one liter) capacity. At the same time the gas-sensing element 1, heated to 550°C, is put into the chamber which is then sealed, and the chamber interior is maintained at room temperature for about 20 minutes. At this time the chamber is filled with a vapor of trimethyl chlorosilane of about 30 percent by volume under a fixed vapor pressure. Trimethyl chlorosilane immediately starts thermally decomposing on the surface of the sintered tin oxide of the heated gas-sensing element 1, as expressed by the following reaction formula:

$$(CH_3)_3SiCl+6O_2 \rightarrow SiO_2+HCl+3CO_2+4H_2O$$

By this reaction trimethyl chlorosilane undergoes chemical vapor deposition onto the surface of the sintered piece of tin oxide 5 to form a layer 6 of silicon oxide ($SiO_2$) inactive for oxidation of hydrogen, realizing the hydrogen-selective sensor 7 as shown in Figures 2 and 3.

The layer 6 of silicon oxide thus formed is a compact uniform layer overlying the surface of the sintered piece 5 of tin oxide, as illustrated in the enlarged view of Figure 4.

In manufacturing the hydrogen-selective sensor 7 as described above, the silicon compound such as trimethyl chlorosilane is controlled at a predetermined temperature and a predetermined vapor pressure. Since the silicon compound is thermally decomposed on the surface of the heated sintered piece of tin oxide and a thin layer of silicon oxide is formed thereon through chemical vapor deposition, the resulting sensor 7 is manufactured uniformly and easily. Therefore, according to the described method, the fine cavities of various sizes scattered over the surface of the sintered piece 5 of tin oxide are thoroughly filled by silicon oxide produced by the thermal decomposition, and the surface becomes coated with a very thin layer 6 of silicon oxide which is inactive for oxidation of hydrogen. The layer 6 thus formed is readily permeable by small size molecules such as hydrogen molecules but not by larger molecules. The hydrogen-selective sensor 7 thereby obtained has a high degree of sensitivity owing to the property of the silicon oxide layer 6 which permits easy passage of hydrogen molecules but checks passage of other molecules.

The silicon oxide layer 6 is very stable both chemically and thermally and is therefore highly durable.

In addition to silicon oxide as above, the layer or coat formed on the sintered piece 5 of tin oxide may comprise aluminum oxide ($Al_2O_3$) or silicon nitride ($Si_3N_4$). Alternatively, two or more layers of silicon oxide, aluminum oxide and silicon nitride may be placed one on top of another, or they may be subjected to vapor deposition simultaneously.

The highly sensitive hydrogen-selective sensor 7 is obtained by forming the described hydrogen selective layer 6 of silicon oxide, aluminium oxide or silicon nitride on the surface of the semiconductor which instead of the sintered piece of tin oxide 5 may be one of the other sintered metal oxides identified above.

Figure 5 is a graph illustrating the relationship between the treating time in the formation of the ceramic layer 6 and sensitivity of the gas-sensing element in respect of various types of gas. As seen in this graph, the sensitivity increases for all types of gas during the initial period (for about two minutes). Thereafter, in about five minutes the sensitivity reaches a maximum level for hydrogen which is maintained, but falls away rapidly to low levels for the other gases in about 20 minutes. The graph indicates that at this time a compact ceramic layer 6, having a suitable thickness, has been formed on the surface of the hydrogen-selective sensor 7 to permit easy passage of hydrogen only.

A sensitivity curve of the hydrogen-selective sensor 7 thus manufactured with respect to the various types of gas is shown in Figure 6A. At the same time, a sensitivity curve of the gas-sensing element of the hydrogen-selective sensor 7 prior to the treatment to form the ceramic layer 6 is shown in Figure 6B for comparison purposes.

Figure 7 is a graph showing dependency of the output voltage in the case of 100 ppm hydrogen gas on bridge voltage for a gas sensor of this invention with a ceramic layer of $SiO_2$ and, for comparison, an equivalent uncoated sensor.

Figure 8 is a view showing a measurement circuitry, in which reference Rs represents the semiconductor 5 of the hydrogen-selective sensor 7, $R_0$, $R_1$ and $R_2$ denote resistors having an equal value of resistance $R_0'$, E denotes an electric source, and V denotes a voltmeter.

As seen, the semiconductor Rs and the three resistors $R_0$, $R_1$ and $R_2$ form a bridge circuit, and a

certain voltage E' is applied to one diagonal line thereof. At both ends of the other diagonal line, displacements from the electric potential equilibrium resulting from resistance value variations caused by the gas adsorption on the semiconductor Rs are taken out as the output voltage *Vout* of the sensor.

$$Vout=Vgas-Vair$$

$$=-E'\left(\frac{Rs_1}{Rs_1+R'_0}-\frac{Rs_0}{Rs_0+R'_0}\right)$$

wherein $Rs_1$ is a resistance value of the semiconductor in the gas, $Rs_0$ is a resistance value of the semiconductor in the air, *Vgas*, is an output voltage in the gas, and *Vair* is an output voltage in the air.

The semiconductor of the gas-sensing element 1 in this invention may comprise one of the following: $SnO_2$, ZnO, $Co_3O_4$, $WO_3$, $In_2O_3$+Pt, α-$Fe_2O_3$, and $BaTiO_3$+$Np_2O_3$.

Compounds which can be used to form a ceramic layer of aluminum oxide by thermal decomposition include alkyl aluminum halides, for example,
$(CH_3)_3Al_2Cl_3$, $(CH_3)_2AlCl$, $CH_3AlCl_2$,
$(C_2H_5)_3Al_2Cl_3$, $(C_2H_5)_2AlCl$, and $C_2H_3AlCl_2$;
aluminum alkoxides (i.e. alcoholates), for example, $Al(OC_2H_3)_3$ etc; and alkylaluminum compounds, for example,
$(CH_3)_3Al$, $(C_2H_5)_3Al$, $(i\text{-}C_3H_7)_3Al$,
$(i\text{-}C_4H_9)_3Al$, and $(n\text{-}C_4H_9)_3Al$.

Compounds which can be used to form a ceramic layer of silicon oxide by thermal decomposition include alkylsilicon compounds such as
$(CH_3)_4Si$, $(CH_3)_2(C_2H_5)_2Si$, $(C_2H_5)_4Si$,
$(C_6H_5)_3CH_3Si$, and $(CH_3)_2SiH_2$,
alkylhalogenosilicons such as
$(CH_3)_2SiCl_2$, $(CH_3)_2SiBr_2$, and $(CH_3)_3SiCl$,
silicon alkoxides such as
$Si(OCH_3)_4$ and $Si(OC_2H_5)_4$
or an oligomer thereof,
$(CH_3)_3SiOH$, and $(CH_3)_3SiOSi(CH_3)_3$,
and silicon halides such as $SiCl_4$, $SiBr_4$ and $SiI_4$.

Furthermore, in order to form a layer of silicon nitride, a vapor of a silicon amide compound or the like may be decomposed in nitrogen gas.

**Claims**

1. A hydrogen gas sensor comprising a gas sensing element (1) including a semiconductor member (5) whose electrical conductivity is sensitive to the presence of hydrogen, and a thin layer (6) of a material inactive for oxidation of hydrogen formed on a surface of said gas-sensing element so as to cover the same to serve as a diffusion barrier for said semiconductor member, characterized in that said semiconductor member (5) comprises a sintered metal oxide selected from $SnO_2$, ZnO, $Co_3O_4$, $WO_3$, $In_2O_3$+Pt, α-$Fe_2O_3$ and $BaTiO_3$+$Np_2O_3$, and in that said thin layer (6) is a ceramic selected from silicon oxide, aluminum oxide and silicon nitride, and has a porosity such as to permit ready passage of hydrogen molecules but inhibit passage of other gases.

2. A gas sensor as defined in Claim 1, wherein said thin layer (6) is formed by causing a vapor, thermally decomposable to produce silicon oxide, aluminum oxide or silicon nitride, to decompose on said semiconductor member (5) heated to a temperature to effect said thermal decomposition of said vapor, thereby to deposit silicon oxide, aluminum oxide or silicon nitride on said semiconductor member (5).

3. A gas sensor as defined in Claim 2, wherein said vapor comprises vapor of a compound selected from alkyl silicon halides, silicon alkoxides, silicon alkoxide oligomers, alkyl silicons, and silicon halides, which is thermally decomposable to produce a silicon oxide.

4. A gas sensor as defined in Claim 2, wherein said vapor comprises vapor of a compound selected from alkyl aluminum halides, aluminum alkoxides and alkylaluminum, which is thermally decomposable to produce an aluminum oxide.

5. A gas sensor as defined in Claim 2, wherein said vapor comprises a silicon amide compound which is thermally decomposable to produce a silicon nitride.

**Patentansprüche**

1. Wasserstoffgasfühler mit einem Gasdetektorelement (1) bestehend aus einem Halbleiterelement (5), dessen elektrische Leitfähigkeit auf das Vorhandensein von Wasserstoff reagiert, und einer dünnen Schicht (6) eines Materials, das auf einer Oberfläche des Gasdetektorelements aufgebracht ist und gegenüber der Oxidation von Wasserstoff inaktiv ist, so daß es das Gasdetektorelement abdeckt und dadurch als Diffusionsschranke für das Halbleiterelement fungiert, dadurch gekennzeichnet, daß das Halbleiterelement (5) aus einem gesinterten Metalloxid besteht, das aus $Sno_2$, ZnO, $Co_3O_4$, $WO_3$, $In_2O_3$+Pt, α-$Fe_2O_3$ und $BaTiO_3$+$Np_2O_3$ gewählt wurde, und daß die dünne Schicht (6) aus Keramik ist, das aus Siliziumoxid, Aluminiumoxid und Siliziumnitrid gewählt wurde, und eine Porosität aufweist, um den leichten Durchtritt von Wasserstoffmolekülen zu gewährleisten und gleichzeitig den Durchtritt anderer Gase zu verhindern.

2. Gasfühler nach Anspruch 1 dadurch gekennzeichnet, daß die dünne Schicht (6) sich dadurch bildet, daß ein Dampf, der zur Bildung von Siliziumoxid, Aluminiumoxid oder Siliziumnitrid thermisch zerlegbar ist, auf dem Halbleiterelement (5) zur Zerlegung gebracht wird, wobei das Halbleiterelement (5) auf eine Temperatur erwärmt wird, bei der die thermische Zerlegung des Dampfes bewirkt wird, wodurch sich Siliziumoxid, Aluminiumoxid oder Siliziumnitrid auf dem Halbleiterelement (5) ablagern.

3. Gasfühler nach Anspruch 2, dadurch gekennzeichnet, daß der Dampf aus dem Dampf einer

Verbindung besteht, die aus Alkylsiliziumhalogeniden, Siliziumalkoxiden, Silizium - Alkoxid - Oligomeren, Alkylsiliziume, und Siliziumhalogeniden gewählt wurde, und die zur Erzeugung eines Siliziumoxids thermisch zerlegbar ist.

4. Gasfühler nach Anspruch 2 dadurch gekennzeichnet, daß der Dampf aus dem Dampf einer Verbindung besteht, die aus Alkylaluminiumhalogeniden, Aluminiumalkoxiden und Alkylaluminium gewählt wurde, die zur Erzeugung eines Aluminiumoxides thermisch zerlegbar ist.

5. Gasfühler nach Anspruch 2 dadurch gekennzeichnet, daß der Dampf aus einer Siliziumamidverbindung besteht, die zur Erzeugung eines Siliziumnitrides thermisch zerlegbar ist.

**Revendications**

1. Capteur ou détecteur d'hydrogène gazeux, comprenant un élément (1) détecteur de gaz comprenant un élément (5) semi-conducteur dont la conductivité électrique est sensible à la présence d'hydrogène, et une couche (6) mince d'une matière incapable d'effectuer une oxydation de l'hydrogène et formée à la surface de cet élément détecteur de gaz de façon à recouvrir cette surface pour servir de barrière s'opposant à la diffusion vers ledit élément semi-conducteur, détecteur caractérisé en ce que ledit élément (5) semi-conducteur comprend un oxyde de métal fritté, choisi parmi $SnO_2$, ZnO, $Co_3O_4$, $WO_3$, $In_2O_3$+Pt, α-$Fe_2O_3$ et $BaTiO_3$+$Np_2O_3$, et en ce que ladite couche (6) mince est une matière céramique choisie parmi de l'oxyde de silicium, de l'oxyde d'aluminium et du nitrure de silicium, et elle a une porosité telle qu'elle permet aux molécules d'hydrogène de passer facilement mais qu'elle empêche les autres gaz de passer.

2. Détecteur de gaz tel que défini à la revendication 1, dans lequel on forme ladite couche (6) mince en provoquant la décomposition d'une vapeur, thermiquement décomposable pour produire de l'oxyde de silicium, de l'oxyde d'aluminium ou du nitrure de silicium, sur ledit élément (5) semi-conducteur chauffé à une température permettant de réaliser ladite décomposition thermique de cette vapeur, afin de provoquer le dépôt d'oxyde de silicium, d'oxyde d'aluminium ou de nitrure de silicium sur ledit élément (5) semiconducteur.

3. Détecteur de gaz tel que défini à la revendication 2, dans lequel ladite vapeur comprend de la vapeur d'un composé choisi parmi des halogénures d'alkyl silicium, des alcoolates de silicium, des oligomères d'alcoolates de silicium, des alkyl siliciums et des halogénures de silicium, ce composé étant thermiquement décomposable pour produire de l'oxyde de silicium.

4. Détecteur de gaz tel que défini à la revendication 2, dans lequel ladite vapeur comprend de la vapeur d'un composé choisi parmi des halogénures d'alkyl aluminium, des alcoolates d'aluminium et un alkyl aluminium, qui est thermiquement décomposable pour produire un oxyde d'aluminium.

5. Détecteur de gaz selon la définition de la revendication 2, dans lequel ladite vapeur comprend un amidure de silicium, ou un amide contenant du silicium, qui est thermiquement décomposable pour produire un nitrure de silicium.

Fig. 1

(PRIOR ART)

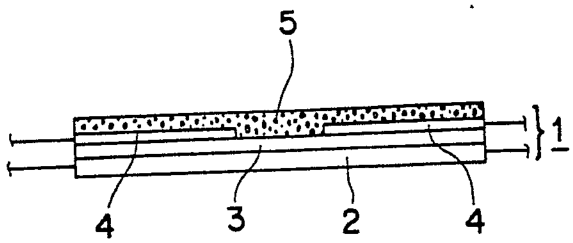


Fig. 2

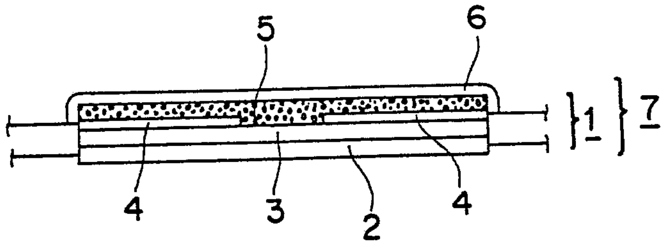


Fig. 3

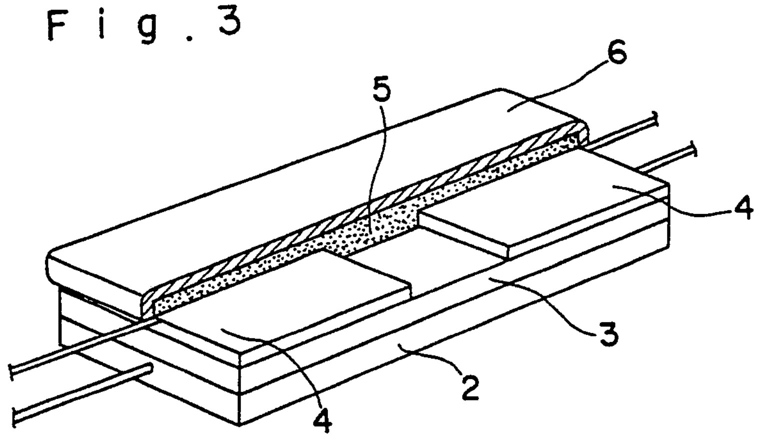


Fig. 4

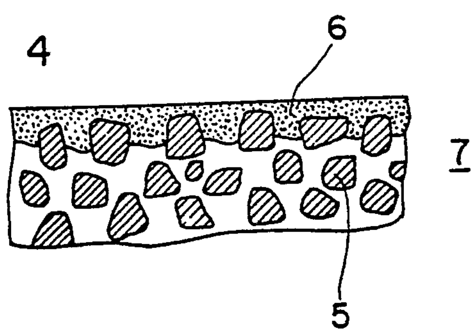

F i g . 5

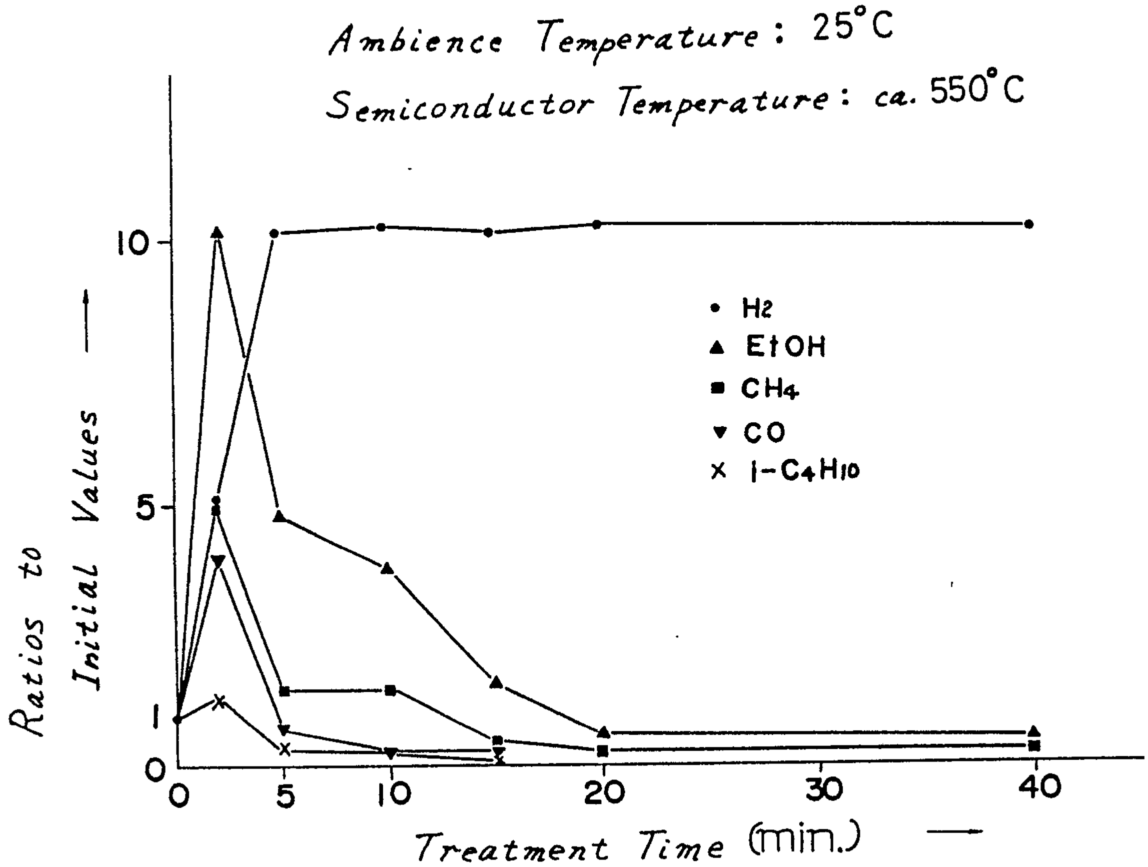
Ambience Temperature : 25°C
Semiconductor Temperature : ca. 550°C
Ratios to Initial Values
10
5
1
0
0
5
10
20
30
40
Treatment Time (min.)
H2
EtOH
CH4
CO
i-C4H10

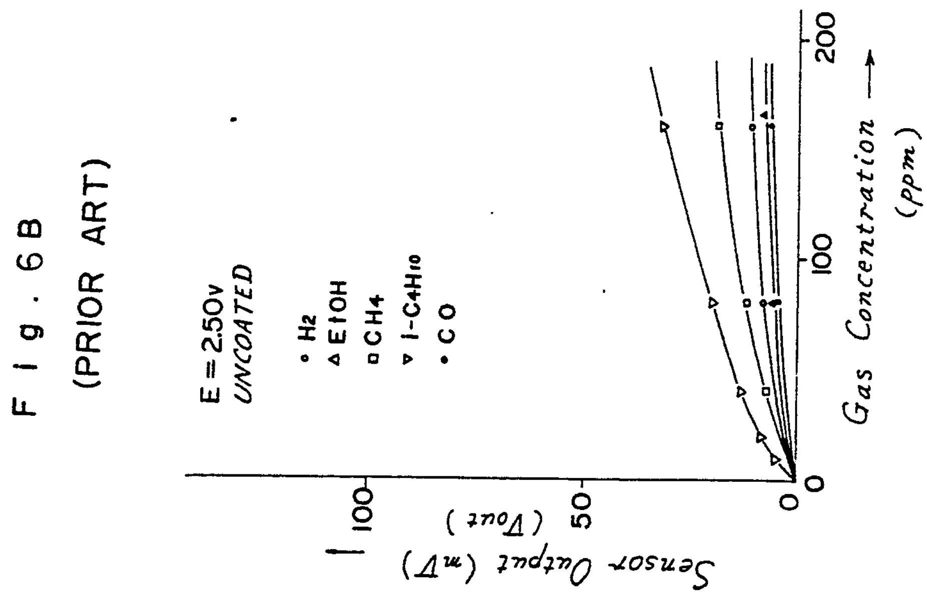
Fig. 6B
(PRIOR ART)
E = 2.50v
UNCOATED
∘ H2
△ EtOH
□ CH4
▽ i-C4H10
• CO
Sensor Output (mV)
(Vout)
0
50
100
Gas Concentration
(ppm)
0
100
200

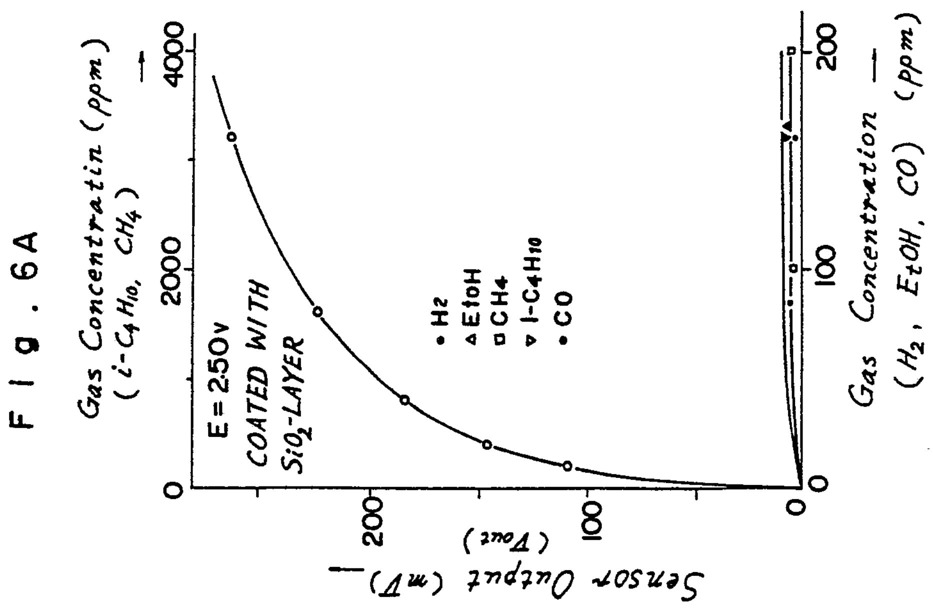
Fig. 6A
Gas Concentratin (ppm)
(i-C4H10, CH4)
0
2000
4000
E = 2.50v
COATED WITH
SiO2-LAYER
• H2
△ EtOH
□ CH4
▽ i-C4H10
• CO
Sensor Output (mV)
(Vout)
0
100
200
Gas Concentration
(H2, EtOH, CO) (ppm)
0
100
200

F i g . 7

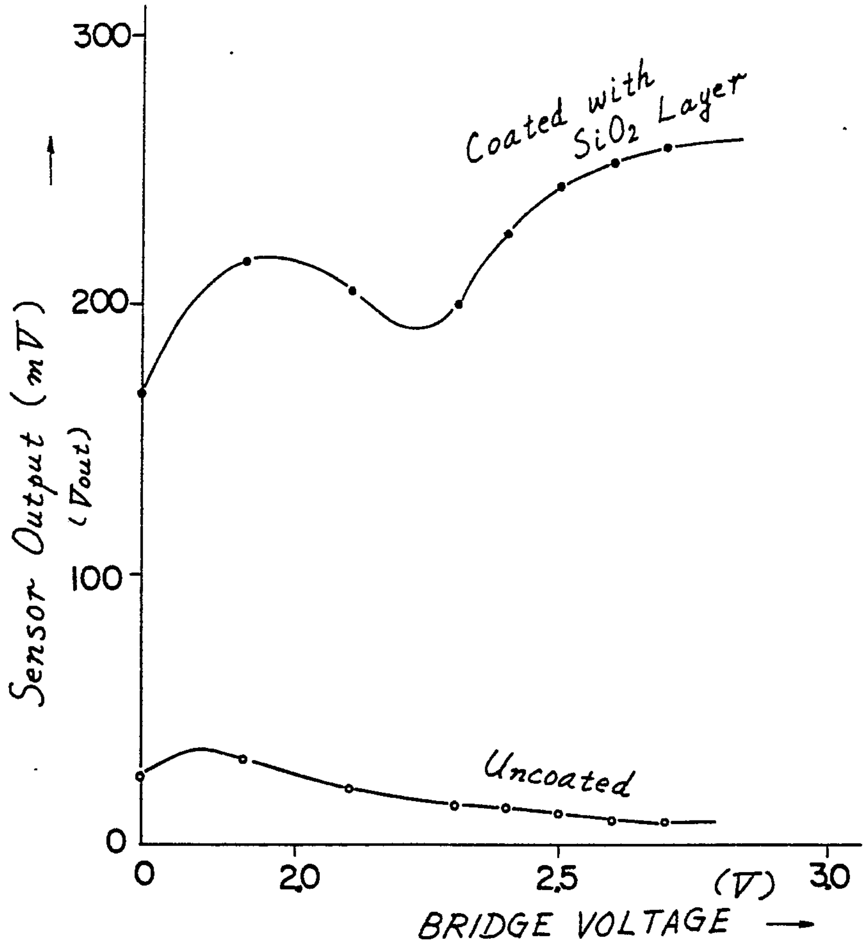
300
200
100
0
Sensor Output (mV)
(Vout)
Coated with SiO2 Layer
Uncoated
0
2.0
2.5
3.0
(V)
BRIDGE VOLTAGE

F i g . 8

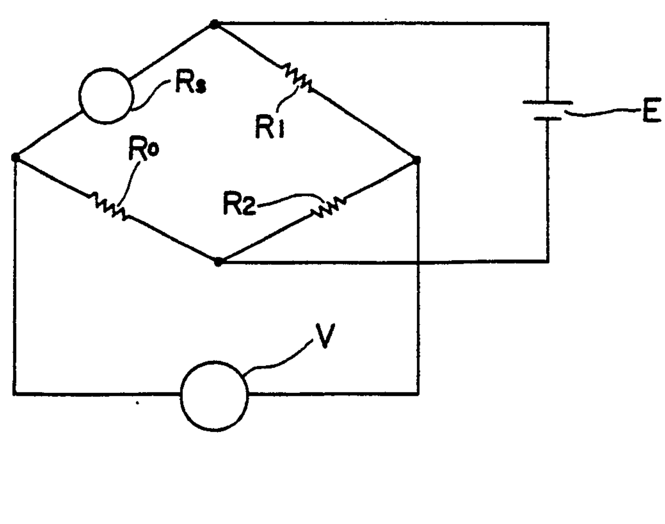
Rs
R1
Ro
R2
E
V